# DEMANDE DE BREVET EUROPEEN

(11) **EP 2 065 543 A1**
(43) Date de publication de la demande: **03.06.2009**
(21) Numéro de dépôt: 07385006.7
(22) Date de dépôt: 30.11.2007
(51) Int. Cl.: E05B 45/06, B62H 5/18, E05B 67/36

(54) **Module électronique d'alarme pour antivol mécanique**

(71) Demandeur: Artagoitia Fernandez, Alberto, 46240 Carlet, Valencia (ES)
(72) Inventeur: Artagoitia Fernandez, Alberto, 46240 Carlet, Valencia (ES)

(57) **Abrégé**

Module électronique d'alarme pour antivol mécanique caractérisé par un nouveau système électronique d'alarme basé sur l'application d'un détecteur magnétique comme méthode d'activation ou de désactivation de l'alarme, ce qui permet l'isolement total, de tous les composants formant le module de l'alarme , dans un bain de résine, en faisant abstraction de tous types de connection mécanique ou optique, ce qui solutionne les problèmes dérivés par le manque d'isolation que l'on retrouve dans les systèmes actuellement commercialisés.

Module électronique d'alarme pour antivol mécanique caractérisé par lui même grâce à l'utilisation d'un condensateur qui permet le fonctionnement du système quand il se produit une perte momentanée de l'alimentation des piles, qui sont les seuls composants qui se situent à l'extérieur du bain isolant de résine.

## Description

### CHAMPS TECHNIQUE

Accessoires qui empêchent l'usage non autorisé ou le vol de véhicules de deux ou quatre roues.
Antivol pour véhicules de deux ou quatre roues.

### ANTÉCÉDENTS À L'INVENTION

Il existe des dispositifs, dans le champs technique, dans lesquels la mise en action, avec l'aide d'une serrure à clef, par un axe de fermeture en direction perpendiculaire à l'ouverture du dispositif peuvent bloquer le frein à disque de la roue du véhicule usant le dispositif qui empêche son mouvement et pour autant le vol ou usage non autorisé de celui-ci.

Il existe des dispositifs, dans le champs de la technique, dans lesquels se combinent un système mécanique de fermeture du dispositif avec un système électronique d'alarme, de façon à ce que chacun des systèmes soient installés dans le même dispositif, de manière autonome et indépendante du véhicule sur lequel le dispositif est appliqué. Ces dispositif ont pour but d'empêcher l'emploi non autorisé ou le vol de véhicules grâce à l'application du système mécanique de fermeture, alors que le but du système électronique de l'alarme est d'émettre un son quand le dispositif est manipulé ou forcé.

Ces opérations d'agression sont détectées par les systèmes électroniques de l'alarme grâce à l'utilisation de capteurs, qui peuvent être soit par mouvement, soit par vibration ou bien par leur combinaison qui envoit un signal au microcontrôleur, quand l'alarme est activée, celui- ci interprète le signe en fonction d'un programme préétablit qui active la sirène de l'alarme dans la forme désirée par le programmateur.

Il existe des dispositifs, dans le champs technique, dans lesquels ces systèmes mécaniques d'alarme sont activés et/ou désactivés par des systèmes mécaniques d'activation ou de désactivation tels qu'interrupteurs, poussoirs, ou boutons de façon à ce que par la mise en action du système mécanique de fermeture ou bien par l'intervention de l'usager se produise l'activation ou désactivation de l'alarme. Ce type d'activation a comme inconvénient qu'il nécessite un élément mécanique de connection entre le module électronique de l'alarme et le système mécanique de fermeture, ce qui le rend vulnérable aux problèmes comme l'humidité et l'oxydation, comme l'encrassement et la possibilité d'une rupture dont tout le système mécanique peut souffrir.

Il existe des dispositifs, dans le champs technique, dans lesquels ces systèmes électroniques d'alarme font abstraction des connections mécaniques comentées et doivent utiliser des détecteurs optiques, comme des capteurs d'infrarouge pour permettre l'activation et désactivation de l'alarme par la détection des obstacles par réverbération, détection qui se produit généralement par l'introduction du frein à disque dans l'ouverture du dispositif. Ces systèmes offrent une meilleure protection sur les points faibles du fonctionnement dûs à l'humidité et à l'oxydation et comme il n'existe pas de mouvement mécanique de conection ils ne peuvent pas souffrir de rupture mécanique, cependant ils sont extrêmement suceptible à la saleté, qui peut affecter la détection du halo de lumière infrarouge.

Aussi bien les premiers comme les seconds dispositifs ont besoin d'un ensemble de piles d'alimentation électrique pour le bon fonctionnement de l'alarme, cependant, dans certaines situations comme un impact sur le dispositif, il se produit momentanément une perte d'alimentation électrique, ce qui provoque des points faibles dans les systèmes électroniques de l'alarme.

Le dispositif de notre invention présenté ci-dessous, prétend solutionner les problèmes décrits auparavant grâce à l'application de composants électroniques combinés d'un module d'alarme indépendant du dispositif sur lequel il est installé.

### DESCRIPTION DE L'INVENTION

Le dispositif de l'invention presente un nouveau système électronique d'alarme basé sur l'application d'une série de composants électroniques qui permettent l'isolement étanche de tous les composants qui forment le module de l'alarme, en solutionnant les problèmes dérivés par le manque d'isolation qui se produisent dans les systèmes commercialisés dans l'actualité.

Le mécanisme en question utilise comme système d'activation et désactivation de l'alarme, un détecteur inductif situé à l'intérieur du module d'alarme, grâce à la détection d'un champs magnétique, envoie un signal électrique au microcontrôleur, qui la traite en fonction d'un programme préétablit pour éteindre ou allumer l'alarme. Le champs magnétique est généré par un aimant qui se déplace solidairement avec l'axe de fermeture mécanique du dispositif et à une certaine distance du détecteur magnétique, car il n'est pas nécessaire aucun type de contact physique ou optique. Cette caractéristique permet d'isoler absolument le système électronique de l'extérieur grâce à un bain de résine qui élimine tous les problèmes dérivés des points faibles du fonctionnement dûs à l'humidité , oxydation, encrassement ou rupture.

L'unique élément, qui n'est pas isolé, sont les piles nécessaires pour l'alimentation du système, car elles doivent être remplacées par l'utilisateur. Ceci pourrait occasionner une perte momentannée de l'alimentation dans le système en cas de recevoir un fort impact qui déplacerait les piles de leurs logements. Pour éviter ce problème, le système est doté d'un condensateur de caractère capacitif qui assure l'alimentation du système en cas de perte momentanée de l'alimentation.

Pour compléter la description, qui ci-après va se faire sous la forme de la meilleure réalisation, et qui a pour objet une meilleure compréhension des caractéristiques de l'invention, celle-ci est accompagnée par la présente mémoire descriptive et par quelques schémas basés sur des figures qui nous rendrons plus faciles la compréhension des innovations et des avantages de ce dispositif, objet de l'invention.

### BREVE DESCRIPTION DES FIGURES

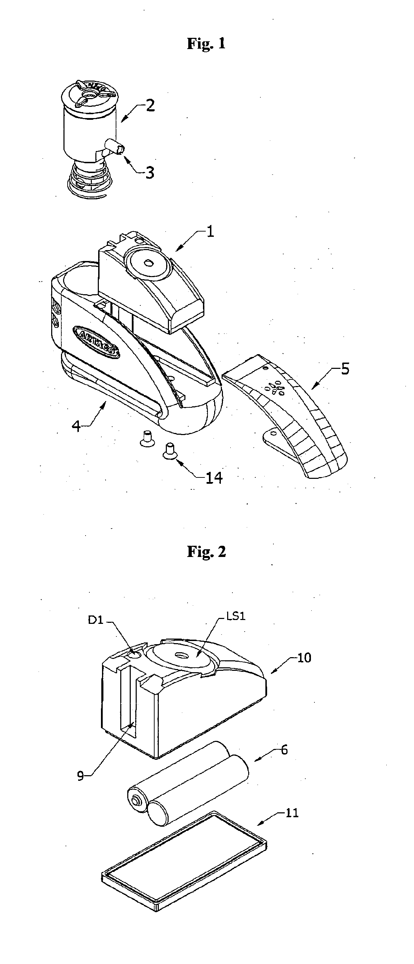

**Fig. 1****.** Vue éclatée du dispositif antivol (4) où l'on peut apprécier le système mécanique de fermeture (2) formé par un axe de fermeture qui se déplace en dirrection perpendiculaire à l'ouverture du dispositif mis en action par une serrure avec clef, bloquant ou débloquant l'ouverture du dispositif. Solidaire à ce système mécanique il y a un aimant (3) qui est chargé d'activer ou de désactiver l'alarme, il est installé dans le module de l'alarme (1) et est protégé à l'intérieur du dispositif (4) par la couverture (5), qui est tenue par des tournevis (14).
**Fig. 2****.** Vue éclatée du module de l'alarme (1) où l'on peut voir la carcasse en plastique (10) où sont installés les composants électroniques qui forment le système d'alarme, isolés complètement par un bain de résine. De ce bain de résine dépasse seulement le led (D1) et le haut parleur ou sirène (LS1) car ces éléments sont résistants à l'humidité. On voit aussi la situation du détecteur magnétique (9) et les piles (6), qui sont protégées par la couverture de gomme (11).

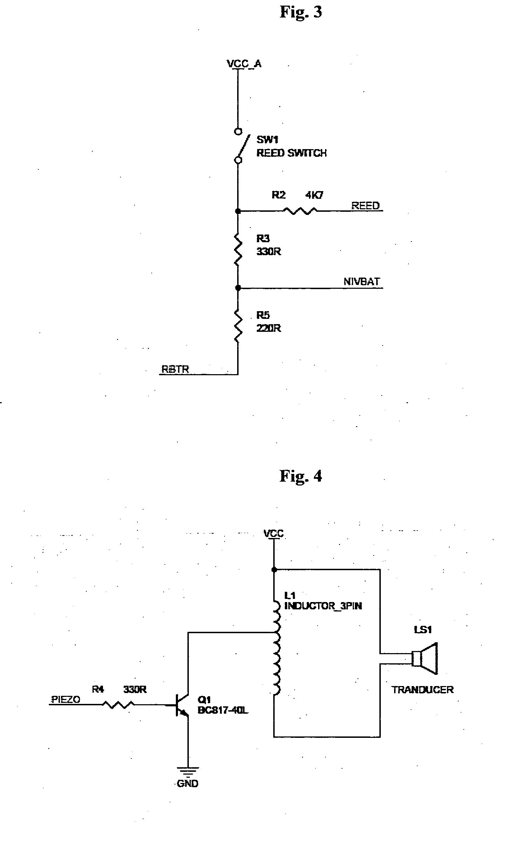

**Fig. 3****.** Schéma électrique du détecteur magnétique (SW1) chargé de l'activation et de la désactivation de l'alarme et de ses connections.
**Fig. 4****.** Schéma électrique du haut parleur ou sirène (LS1) chargé d'émettre un signal sonore et ses connections.
**Fig. 5****.** Schéma électrique du led (D1) chargé d'émettre un signal lumineux et ses connections.

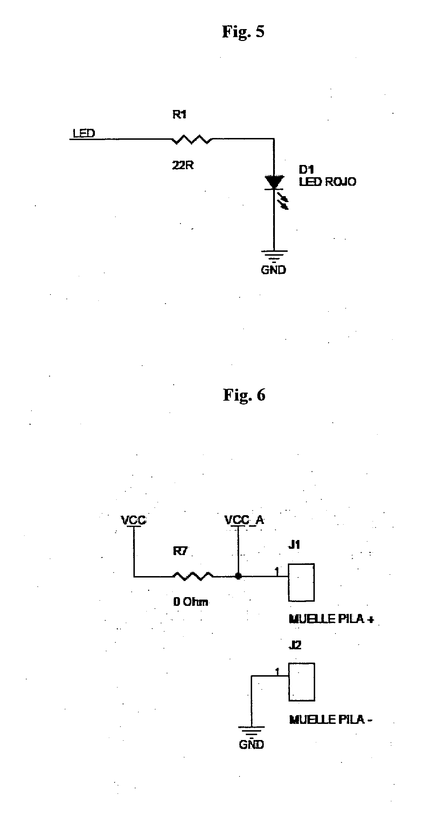

**Fig. 6****.** Schéma électrique du microcontrôleur (U1) chargé de controler les fonctions de l'alarme et ses connections, où l'on peut voir le connecteur (J5) par lequel se programme le microcontrôleur (U1), le détecteur de mouvements et vibrations (J3) chargé de détecter n'importe quelle manipulation de l'antivol et le protecteur de baterie inversée (Q2) qui se charge de protéger le système électronique dans le cas où il se ferait un montage incorrect des piles (6). On voit aussi le condensateur (C1) chargé d'assurer l'alimentation du système dans le cas où il se produirait une perte momentanée de l'alimentation.

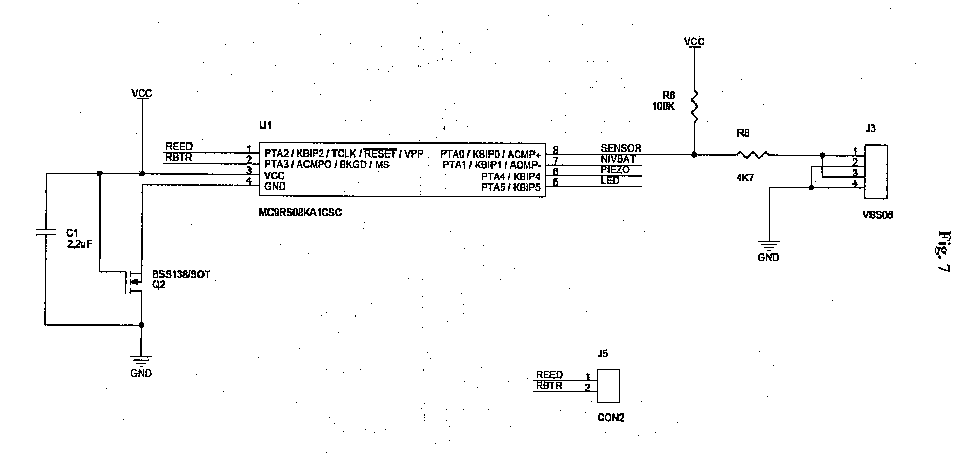

**Fig. 7****.** Schéma électrique des ressorts (J1, J2) chargé de réaliser la connection entre les piles pour l'alimentation du système et ses connections.

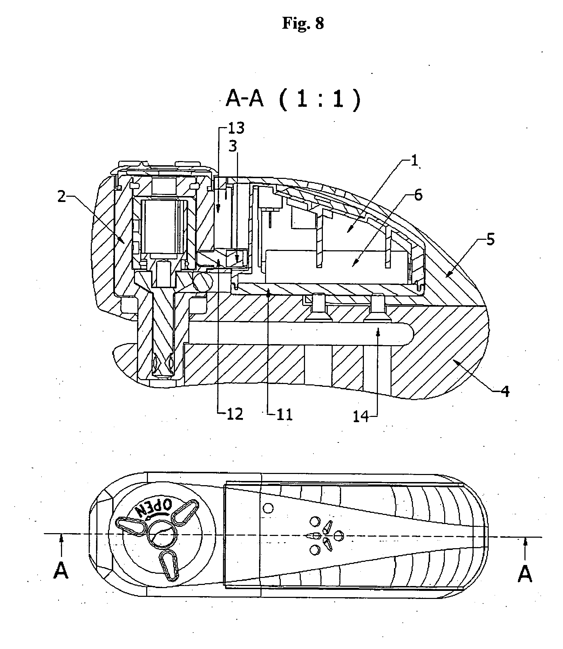

**Fig. 8****.** Vue en coupe du dispositif, où l'on peut voir la rainure (13) faite dans le dispositif (4) afin de permettre le mouvement solidaire de l'élément de maintien (12) de l'aimant (3) avec le corps de fermeture (2) et le montage de tous les éléments du dispositif.

### DESCRIPTION D'UNE FORME DE RÉALISATION PRÉFÉRÉE.

En regardant les deux figures, on peut observer comment le dipositif se compose d'un corps de fermeture (2) qui se loge dans le dispositif antivol (4) par lequel il peut se déplacer linéairement, ouvrant ou fermant l'ouverture par laquelle s'introduit l'élément à bloquer, habituellement un frein à disque de moto, grâce à l'axe de fermeture. Assemblé au corps de fermeture (2) on touve un élément de soutien pour l'aimant (3), qui se déplace de forme solidaire au corps de fermeture (2).

Le corps du dispositif (4) dispose d'un logement où s'introduit le module d'alarme (1) et d'une rainure (13) par laquelle glisse le corps de maintien (12) de l'aimant(3).

Lorsque le corps de fermeture(2) se trouve dans sa position inférieure, position de fermeture, l'aimant (3) se trouve à l'intérieur du rayon de détection du détecteur magnétique(SW1), qui envoie un signal au microcontrôleur (U1) qui ordonne au haut-parleur(LS1) l'émission d'un unique sifflement pour avertir de l'activation de l'alarme. Dans le cas où la charge des piles soient inférieures à la nécessaire pour un fonctionnement correct du système, la led (D1) clignotera indicant le remplacement de celles-ci.

Une fois l'alarme activée, n'importe quel changement de position, inclination ou vibration sera détectée par le détecteur (J3) qui enverra un signal au microcontrôleur (U1) qui la traitera en faisant sonner un signal accoustique de mise en garde à travers du haut-parleur (LS1) pendant 5 segondes et en faisant clignoter la led (D1) en même temps. Si le détecteur (J3) n'émet aucun signal de détection pendant ces 5 segondes, le microcontrôleur(U1) réactivera l'alarme et la mettra en attente. Si le détecteur (J3) continue d'émettre un signal de détection passé ces 5 segondes, le microcontrôleur (U1) activera l'alarme sous forme de sirène à travers du haut-parleur(LS1) pendant 16 segondes et ordonnera à la led (D1) d'émettre un signal lumineux clignotant en même temps. Cette situation peut se prolonger pendant que le détecteur (J3) détecte n'importe quel type de mouvement ou vibration ou jusqu'à la désactivation de l'alarme au moyen de l'ouverture du dispositif de la part de l'utilisateur. Si au contaire le détecteur (J3) ne détecte aucun type de mouvement ou vibration , le microcontrôleur(U1) ordonnera au système de passer en mode veille.

La désactivation de l'alarme peut se produire seulement grâce à l'ouverture du dispositif, puisque le corps de fermeture(2) doit se trouver dans sa position supérieure, position d'ouverture, pour que l'aimant (3) soit hors de portée du détecteur magnétique (SW1), qui envoie un signal au microcontrôleur (U1) qui interprète le système comme éteint.

Ceci est le fonctionnement normal du système, cependant, dans le cas où le dispositif recevrait un impact suffisamment important pour que les batteries perdent momentanément leurs contacts avec les ressorts (J1 et J2) le récepteur (J3) enverrait un signal au microcontrôleur (U1) qui enverrait l'alarme inmédiatement sous forme de sirène à travers du haut-parleur (LS1) pendant 16 segondes et ordonnerait à la led (D1) d'émettre un signal lumineux clignotant en même temps. Ceci est possible grâce au condensateur (C1) qui assure l'alimentation du système même quand il se produit une perte momentanée d'alimentation.

Cette programmation peut être variée par software grâce à la connexion du module d'alarme à travers du connecteur (J5).

L'alimentation du système se produit à travers de 2 piles (6) de type AAA de 1200mA/h chacune. Comme il a été indiqué, lorsque le microcontrôleur (U1) détecte une charge insuffisante à la nécessaire pour le correct fonctionnement du système, il envoie un signal a la led (D1) qui clignote indiquant le remplacement de celles-ci.

Pour faciliter le remplacement des batteries(6), celles-ci ont été placées à l'extérieur du bain de résine étanche qui protège le système électronique, de forme qu'elles se trouvent protégées par une couverture en gomme (11) qui s'ajuste à la carcasse de plastique (10) qui sert de logement au module de l'alarme. Le remplacement des piles requièrent le démontage du dispositif par le retrait des tournevis (14) qui soutienent la couverture (5). Dans le cas où les piles se déplaceraient inhabituellement le protecteur de batterie inversée (Q2) éviterait une panne du système électronique.

## Revendications

1. Module électronique d'alarme pour antivol mécanique, concrètement un qui, utilise comme forme d'activation et de désactivation, un détecteur magnétique (SW1) ubiqué à l'intérieur du module de l'alarme et qui par sa proximité avec un aimant (3), qui se déplace solidairement avec le corps de fermeture (2) du dispositif, émet un signal qui est traité par un microcontrôleur (U1), ubiqué avec les autres composants à l'intérieur de l'alarme.

2. Module électronique d'alarme pour antivol mécanique, selon les revendications 1, qui par le fait de ne pas avoir besoin de système de connection, ni mécanique ni optique, entre le système électronique de l'alarme et le système mécanique de fermeture qui réalise les fonctions de connection et de déconnection de l'alarme, car sa fonction se fait à tarvers d'un champs magnétique, permet isoler tout le système électrique à l'intérieur d'un module formé d'une carcasse en plastique (10) et d'un couvercle en gomme (11) grâce à un bain de résine étanche, qui le protège de toutes agressions externes et lui donne une résistance mécanique très élevée.

3. Module électronique d'alarme pour antivol mécanique, selon les revendications 2, qui dispose de tous les éléments électroniques qui forment le système électronique de l'alarme à l'intérieur d'une carcasse en plastique (10) et d'un bain protecteur de résine, à l'exception des piles (6), protégées par un couverlcle en gomme (11) qui les protège des agressions externes, car celles-ci doivent être faciles à remplacer, et qui par leur position hors du bain de résine sont suceptibles de se déplacer en recevant un fort impact, ce qui provoquerait une perte momentanée de l'alimentation qui rendrait le système de l'alarme inutile.

4. Module électronique d'alarme pour antivol mécanique, selon les revendications 3, qui dispose d'un condensateur (C1), protégé par un bain de résine à l'intérieur du module ainsi que tous les autres composants électroniques, qui assure l'alimentation du microcontrôleur (U1) dans le cas de perte momentanée de l'alimentation par les piles (6), ce qui permet le fonctionnement du système électronique même en cas de fort impact.

5. Module électronique d'alarme pour antivol mécanique, selon les revendications 4, qui à former un module indépendant et autonome, peut être installé à l'intérieur d'un antivol mécanique, formant un seul dispositif.

6. Module électronique d'alarme pour antivol mécanique.
